(19) Europäisches Patentamt
European Patent Office
Office européen des brevets

(11) **EP 1 783 517 A1**

(12) **EUROPEAN PATENT APPLICATION**

(43) Date of publication:
**09.05.2007 Bulletin 2007/19**

(51) Int Cl.:
*G01V 3/12* (2006.01)     *G01S 13/89* (2006.01)

(21) Application number: **05110329.9**

(22) Date of filing: **04.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **AGELLIS Group AB
226 43 Lund (SE)**

(72) Inventors:
• **Bååth, Lars
310 31, Eldsberga (SE)**
• **Nilsson, Emil
310 40, Halmstad (SE)**

(74) Representative: **Lindberg, Olle Nils Olof et al
Albihns Malmö AB
P.O. Box 4289
203 14 Malmö (SE)**

(54) **Multi-dimensional imaging method and apparatus**

(57)     A method, an antenna, and a system for determining positions for reflection points using microwaves. An electromagnetic wave signal is generated at a defined frequency, and transmitted by an antenna unit (30). The antenna unit (30) includes a transmitter antenna and a plurality of receiver antennas, separated by a known spacing perpendicular to a main line of sight (z) and devised to receive reflected portions of the transmitted wave. Phase comparator means are connected to the transmitter antenna and the receiver antennas, and a control unit connected to the phase comparator means is operable to calculate an angle $(\phi,\theta)$ to a reflection point (P) from detected phase difference between at least two receiver antennas and the spacing between said at least two receiver antennas, and to calculate a distance (r) to the reflection point (P) from detected phase difference between the transmitter antenna and a receiver antenna dependent on the frequency.

Fig. 3

**Description**

Field of the invention

The present invention relates to a solution for determining positions in space of points of reflection, by using coherent electromagnetic radiation. More particularly, the invention relates to devices and methods for obtaining three-dimensional image data of objects and surfaces, using an array of radar antennas.

Background

In different applications, there is a need to obtain a measurement of positions in space of certain elements. In this context, a position may mean the relative position in one, two or three dimensions. This may involve positioning of discrete elements in relation to a reference position, or obtaining an image representation of a surface or even entire bodies.

One way of positioning is to use radar, Radio Detection And Ranging. The term radar is understood to mean a method by means of which short electromagnetic waves are used to detect objects, typically distant objects, and determine their location and movement. Radar includes a transmitter with an antenna, a reflecting target, a receiver with an antenna, which may be the same as the transmitter antenna, and a transmission path between the antenna(s) and the target. Radar systems were originally developed for military purposes, but are today used in many civil and industrial applications as well. Within the general concept of radar, there are different methods and devices with different characteristics, and radar applications a generally operated in the region of technical microwaves between 1-100 GHz. When used for the purpose of positioning, the different types of radar technologies used include pulse radar, FMCW radar and interferometer radar. The pulse radar transmits short-duration electromagnetic pulse, which may be carrier-modulated or non-modulated. The distance to the target is calculated from the transit time between transmission and reception. In FMCW radar, Frequency-Modulated Continuous Wave, the signal is continuously present but the frequency is modulated, usually in successive linear ramps. This means that by calculating the frequency difference between a presently transmitted wave and simultaneously received wave, which was transmitted at a different point in time on the frequency ramp, a low-frequency difference signal in the order of kHz is obtained. The frequency of that signal is proportional to the distance to the target. An interferometer radar works by transmitting a signal of constant frequency for a certain period of time, and comparing the transmitted signal with the signal received after reflection in the target. By combining the transmitted and received signal in an interferometer to obtain a mixed signal, the relative phase between the signals may be deduced. The obtainable accuracy is relatively high, but the result is periodical with half the wavelength of the signal.

Prior art

Many different solutions for measuring the distance to a target have been suggested, based on the fundamental principles of the technologies mentioned above. When measuring the distance to an object a directional antenna is typically used both for transmit and receive, such as a horn antenna or a parabolic antenna. Such devices are extensively used in different industrial applications, such as for contact free level measurement of liquid media, and predominantly measure a one-dimensional distance. For many purposes, a one-dimensional distance measurement is not enough, though.

One known solution for radar detection over surfaces is the synthetic aperture radar SAR, which uses a moving platform to simulate a long antenna. The platform could be an aircraft or a satellite. A pulse is emitted from the on-board radar, and the reflected signal is then received during the flight of the platform over the target area. The same receiver is therefore used to receive the signal at different positions along the flight path. This way, a long antenna, with the same length as the flight path over the pulse length, can be synthesized. SAR is mainly used in earth resource monitoring and mapping, or for military use. "Three-Dimensional Interferometric ISAR Imaging for Scattering Diagnosis and Modelling", by Xiaojian Xu et. al, IEEE Transactions on Image Processing, Vol. 10, No. 7, July 2001, discloses a method for modifying 2-D Inverse SAR (ISAR) imaging to 3-D. This document suggests overcoming the short-coming that a 2-D ISAR image cannot provide information on the relative altitude of each scattering centre on the target, by combining two 2-D images from measurements performed by antennas at different altitudes.

Another known solution for 2-D imaging is the phased array radar, which uses a multiple of antennae, usually small radio horns or patch elements, to synthesize a larger antenna. The antenna elements are phased with embedded system computers to form a single beam with a beam size of the diameter of the array. The beam is positioned on the sky by introducing element-based phase offsets. A pulse is then emitted through the beam and received through the same beam, at high angular resolution. The radar spot on the sky can therefore be easily changed and the sky can be scanned efficiently with a small beam to avoid detection. Phased array radars operate by scanning with a small beam, and are typically developed for military purposes to have a small angular beam and to be able to track targets without using moving parts.

Yet another solution for 2-D imaging is proposed in "Terahertz Imaging Using an Interferometric Array", by John F. Federici et. al, Applied Physics Letters, Vol. 83, No. 12, 22 September 2003. In this document, an imaging interferometer is proposed consisting of an array of individual detectors, where each detector measures amplitude and phase of incoming THz radiation. An image is generated from spatial Fourier components of all different pair combinations of the individual detectors.

Summary of the invention

An overall object of the invention is to provide a method and system using transmission of electromagnetic signals for determining positions in space by detecting signals reflected in points of reflection at those positions. In particular, it is an object to be able to determine the positions of points of reflection in three dimensions.

According to a first aspect of the invention, this object is fulfilled by a method, as well as an apparatus and an antenna unit devised for carrying out the method, according to the appended claims. More particularly, the invention provides a solution for position determination of points of reflection, and generation of three-dimensional representations of surfaces and volumes objects based on the positioned points of reflection. The invention preferably makes use of an antenna design having a wide angle transmission beam and receiver field of view, and this way an entire surface area or object may be simultaneously exposed and positioned. Various preferred embodiments and fields of application are presented in the dependent claims.

Brief description of the drawings

Preferred embodiments of the invention will be described in more detail with reference to the appended drawings, on which

Fig. 1 schematically illustrates a system setup of an apparatus for determining positions of one or more points of reflection in accordance with an embodiment of the invention for determining positions ;

Fig. 2 schematically illustrates an embodiment of an antenna unit in accordance with an embodiment of the invention ;

Fig. 3 schematically illustrates positioning of an off-centre target position in polar coordinates using an antenna according to an embodiment of the invention;

Fig. 4 schematically illustrates positioning of an off-centre target in a projection of a plane through the antenna according to Fig. 3; Fig. 5 schematically illustrates positioning of plural points of reflection on a three-dimensional surface, according to an embodiment of the invention;

Fig. 6 schematically illustrates formation of a surface representation from detected points of reflection, according to an embodiment of the invention;

Fig. 7 schematically illustrates positioning of two in-depth points of reflection on a three-dimensional object, according to an embodiment of the invention;

Fig. 8 schematically determination of the position for a surface using Cartesian coordinates, by means of antenna according to an embodiment of the invention;

Figs 9-10 schematically illustrate an application of an apparatus for determining positions of one or more points of reflection for use in a cargo vessel;

Fig. 11 schematically illustrates an application of an apparatus for determining positions of one or more points of reflection for use in a ground penetrating radar system;

Fig. 12 schematically illustrates an application of an apparatus for determining positions of one or more points of reflection for use with an industrial robot;

Fig. 13 schematically illustrates an application of an apparatus for determining positions of one or more points of reflection, for the purpose of positioning and guiding a vehicle; and

Figs 14-15 schematically illustrates an application of an apparatus for determining positions of one or more points of reflection, for the purpose of monitoring a slag surface in a furnace.

Fig. 16 schematically illustrates a typical experimental set-up using a vector network analyser.

Detailed description of preferred embodiments

The present invention relates a new method and apparatus or system for determining positions in space, by transmission of electromagnetic signals and detecting signals reflected in points of reflection at those positions.

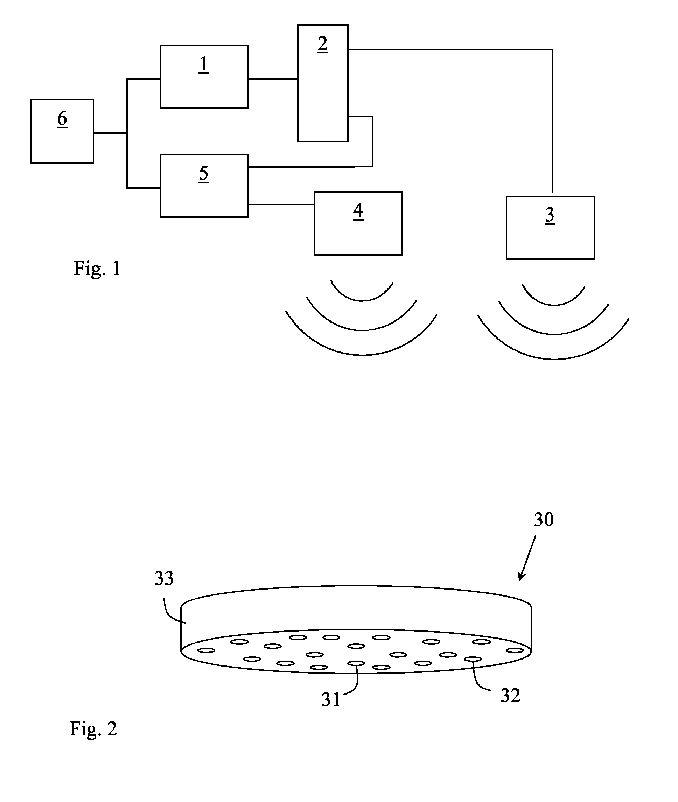

A schematic representation of an apparatus for use in an embodiment of the invention is illustrated in Fig. 1. A signal is created at a defined frequency with a signal generator 1. This signal is transferred via a cable to a power splitter 2 where one path is conveyed via a cable to a transmitter antenna 3. The second path is conveyed via a cable to a phase comparator unit 5 where it is used as reference signal. The transmitter antenna 3 is devised to transmit an electromagnetic signal, created by the signal generator 1, i.e. the transmitter, e.g. in the form of a circularly polarized radio wave, towards a point or a plurality of points of reflection (not shown in Fig. 1). When the transmitted signal hits the target point or points of reflection it is at least partly reflected, and the reflected signal is received by a receiving antenna 4 with a amplifier, i.e. the receiver. For a circularly polarized wave the reflected signal is received in the opposite circular polarization due to the odd number of reflections. The received signal is transmitted through a cable to the phase comparator 5 and there complex multiplied with the conjugate of time reference signal. The phase and possibly also the amplitude of the complex conjugate multiplication is stored in a table by a computer 6 and the signal generator is stepped in frequency and a new measurement is taken. This procedure continues until a certain number of frequency channels have been measured separately over a frequency band. The equipment is controlled by a control unit including a computer, e.g. computer 6, which also stores the data and performs signal analysis.

Fig. 2 schematically illustrates an embodiment of an antenna unit 30, also called interferometer. According to the invention, antenna unit 30 comprises also a transmitter antenna 31, corresponding to antenna 3 in Fig. 1, and a plurality of receiver antennas or detectors 32, corresponding to antenna 4 in Fig. 1. The transmitter antenna 31 may be separate from the receiver antennas 32, but preferably one of the receiver antennas 32 also operates as transmitter antenna 31. Fig. 2 illustrates an embodiment with 20 antenna elements, devised to act as 20 receiver antennas 32, of which one is also devised to act as transmitter antenna 31. This is just one of an infinite number of possible numbers of antenna elements. Test with 32 antenna elements have successfully been made. The antenna elements are preferably carried by a support member 33, on which they are appropriately attached, such that they are spaced apart in at least one dimension, and preferably in a plane as shown in Fig. 2. The normal direction of that plane, i.e. the plane of the lower surface as shown in Fig. 2, defines a main line of sight for the antenna unit 30. The antenna can be a flat membrane made of a di-electric material on which patches of conductive material are etched. The conductive patches are individually formed to constitute antenna elements for the appropriate wavelength. The beam for an antenna in the microwave region is diffraction limited, with a half power beam width of approximately $\lambda/d$, where $\lambda$ is the microwave wavelength and d is the physical diameter of the antenna. The size of the antenna elements is chosen so that the each individual antenna beam is covering the full volume to be measured, e.g. 120 degrees.

The antenna elements 31, 32 are constructed so as to have a large beam width pattern, or field of view, so that each antenna elements illuminates, or detects radiation from, a large surface area of the target. This way, antenna unit 30 is devised to be used for simultaneously exposing an entire field or object to be positioned, to a coherent electromagnetic wave of a fixed frequency, and to receive reflected signals from the entire field or object.

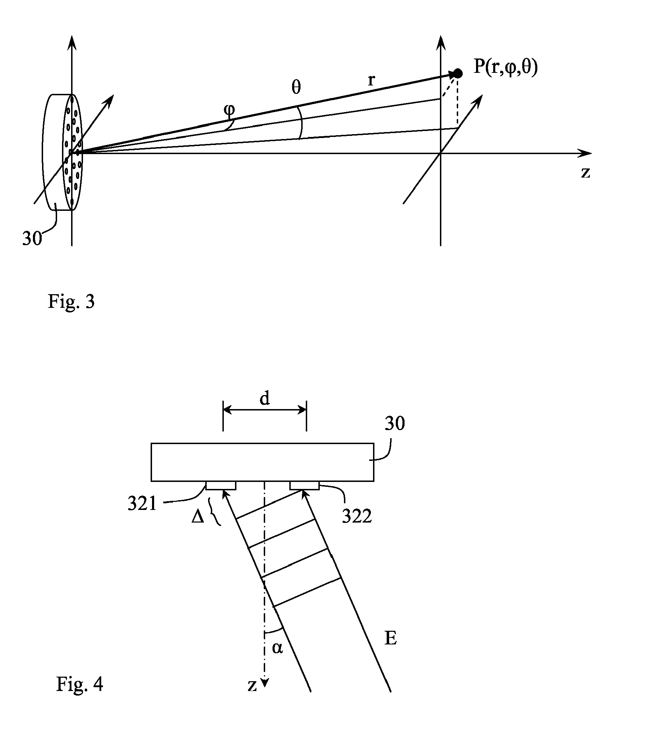

Fig. 3 illustrates schematically how an antenna unit 30 defines a coordinate system, in which the position P of a point of reflection can be assessed in a polar system, in which P has a coordinate $P(r,\varphi,\theta)$ relative to the chosen centre of the antenna unit 30. The main line of sight is indicated by z, though, which is the normal direction of the plane in which the antenna elements 31 and 32 of antenna unit 30 are arranged.

Fig. 4 is a simple drawing showing a projection in a plane of the three-dimensional system of Fig. 3 through antenna 30, and serves as a basic example for understanding how the positioning method according to the invention works. Fig. 4 illustrates schematically how an electromagnetic wave front E reflected back from P is received at the antenna unit 30. In the projection, two receiver antennas 321 and 322 are spaced apart with a spacing d, in a direction perpendicular to the main line of sight z. Furthermore, in the shown projection the electromagnetic wave reflected back from P is received at an angle $\alpha$ relative to the main line of sight. The period of the received coherent electromagnetic wave E is indicated in the drawing, from which it is obvious that there is a phase difference of the signal detected at a point in time in receiver antenna 321 and receiver antenna 322. Since the frequency of the transmitted, and thus the received wave E is known, so is the wavelength of wave front E. By analyzing the detected signal in the two receiver antennas 321 and 322 together, the distance $\Delta$ representing the detected phase difference can be calculated. Using the calculated distance $\Delta$ and the known spacing d, a measurement of the angle $\alpha$ may be calculated as $\alpha = \arcsin(\Delta/d)$. Needless to say, the calculated value of $\Delta$ will be periodical with a period of half the wavelength of wave E, so that theoretically a number of different angles of incidence may generate the same detected phase difference. However, if a wave frequency of e.g. 1 GHz is used, and spacing d is in the order of a few centimeters, only one angle will come out of the equation as possible, i.e. where $\Delta/d<1$. Furthermore, even if a higher frequency and a larger spacing d is used, the correct angle $\alpha$ will be locked by using more than two receiver antennas, and combining signals from more than one pair of such antennas. If for instance three antennas, one, two and three, are used, the correct angle $\alpha$ will match the angle calculations made on the antenna pairs one plus two, two plus three, and one plus three. For a given number N of receiver antennas, there are N(N-1)/2 possible pair combinations. By performing these calculations in at least two non-parallel directions in the plane of antenna unit 30, The position P is determined in two dimensions relative antenna unit 30.

For measuring the distance r to the target P, a frequency stepping function is employed. The time-delay of a wave signal relative another wave signal is in the Fourier or frequency space a linear shift of phase with frequency. If a wave is transmitted towards and reflected in a point of reflection P, the relative phase of the transmitted and received waves will therefore change linearly with frequency. In accordance with the invention, this effect is used for establishing a range measurement of the distance r to the target P. As mentioned, a fixed frequency is maintained for the coherent wave during detection of the received reflected wave front, for establishing a measurement of the angle to the target. However, by further changing the frequency of the transmitted signal in steps, and making measurements of the phase difference between the transmitted wave and the received wave at each step, where a fixed frequency is maintained, a plot of the phase difference as a function of the frequency of the transmitted wave would be a line with a slope corresponding to the propagation delay $\Delta t$ of the reflected wave. Preferably, the frequency is changed in a number of steps within a frequency band, and a linearization function is then used to establish a calculated value of the propagation delay $\Delta t$, which represents the optical distance between the antenna unit 30 and the target point of reflection P. The frequency band is chosen to be optimized for reflection on the surfaces and transmission through the materials. Such frequency bands would be 10-12 GHz for slag and steel applications and 60-70 GHz for reflection on sand surfaces. The number of frequency steps is determined by the ambiguity distance, i.e. the largest distance possible to measure with the sampling used. The width of the frequency bandwidth is chosen to achieve maximum resolution which is 1/bandwidth for the required ambiguity distance and sampling. The actual geometrical distance r can therefore also be calculated, provided the index of refraction of the medium present between antenna unit 30 and target P is known or assessed, typically air.

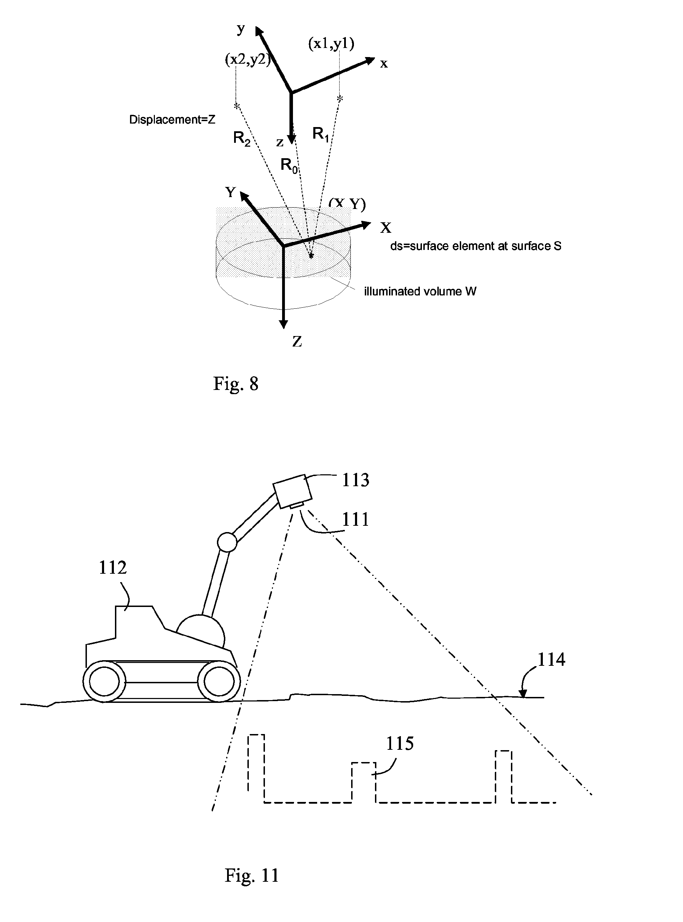

The theory behind the invention for determining positions in three dimensions in accordance with the invention will now be described in more detail, with reference to Fig. 8. Figure 8 basically illustrates the same scenario as in Fig. 3 but in a Cartesian coordinate system for the geometry of an antenna of a radio interferometer looking down into a volume W. x,y,$\tau$ represent the Cartesian co-ordinates of the position on the antenna where the antenna elements of the interferometer is mounted. X,Y,Z represents the Cartesian co-ordinate system of the volume W. $\tau = z/c$, where c is the velocity of light in air, is the linear delay from the antenna to the upper, reference surface of the volume W, $\Delta\tau = 2Z/V$, where V is the velocity of light within the volume W is the additional delay for depth measurements into the volume W. The origin of the x,y,z co-ordinate system is defined as the phase centre of interferometer, while the origin of the X,Y,Z co-ordinate system is defined as the reference position within the volume W.

The transmitter is placed at the phase centre of the interferometer and transmits a plane wave directly towards the reference position within the volume W so that the co-ordinate vectors z and Z are parallel and along the same axis. The distance between the co-ordinate systems along the z axis is defined as R. The illuminated volume is W with reference position S.

Two receiving elements of the interferometer are placed at positions x1,y1 and x2,y2 in the plane of the interferometer. First we consider a surface element ds at the top, reference surface of the volume W at position X,Y. A radio wave at frequency $\upsilon_k$, where k is the frequency index, is transmitted from the reference point to X,Y at reference time t. The wave will travel a distance $R_0 + R_1$ to the receiving element at x1,y1 and the distance $R_0 + R_2$ to the receiving element at x2,y2. The wave will therefore be delayed by:

$$\tau_1 = (\ R_0 + R_1\ )/c \text{ to } x1,y1,$$

and

$$\tau_2 = (\ R_0 + R_2\ )/c \text{ to } x2,y2.$$

Each element ds of S in the plane X,Y produces an electric field $E_1(s,t)$ at x1,y1 and field $E_2(s,t)$ at position x2,y2 in the interferometer plane. The total electric field at each receiver is the integral over all elements of the surface S of the illuminated volume W:

$$e_1(t) = \int_S E_1(s,t)ds$$

$$e_2(t) = \int_S E_2(s,t)ds$$

The mutual spatial coherence function can be written as:

$$\Gamma_{12}(t) = \left\langle e_1(t-\tau_1)e_2^*(t-\tau_2) \right\rangle$$

We will in the following assume the reflections from different regions are statistically independent., i.e. the reflecting signal is spatially incoherent. Coherent areas will produce Speckle in the volume image and can be processed separately. Cross products of terms in the integrand which arise from reflections from different parts of the source will cancel and only the field originating from the surface element ds has to be taken into consideration. The complex amplitude at a distance from the element ds is inversely proportional to the distance and can be written as:

$$\frac{P(t-\tau_n)}{R_n}$$

Assuming that all of the volume under study has the same illumination we can now write the mutual coherence function from the element ds at X,Y of S as:

$$\left\langle e_1(t-\tau_1)e_2^*(t-\tau_2) \right\rangle_m = \left\langle P(t)P^*(t-\tau_2+\tau_1) \right\rangle \frac{e^{[-j2\pi v_k(t-\tau_1)]}}{R_1} \frac{e^{[j2\pi v_k(t-\tau_2)]}}{R_2}$$

$$= \left\langle P(t_1)P^*(t-(\tau_2-\tau_1)) \right\rangle \frac{e^{[j2\pi v_k(\tau_1-\tau_2)]}}{R_1 R_2}$$

If the difference in epochs of arrival time of the wave to x1,y1 and x2,y2 ($\tau_2$ -$\tau_1$) is small compared to the reciprocal of the bandwidth of individual frequency channels $(\Delta v)^{-1}$, i.e. inside the time integration period of the system, then we can neglect this term within the square brackets on the right hand side of the equation. Then:

$$\left\langle e_1(t)e_2^*(t-\Delta\tau) \right\rangle = \left\langle P(t)P^*(t) \right\rangle \frac{e^{[j2\pi v_k(\tau_1-\tau_2)]}}{R_1 R_2}$$

Or in Cartesian co-ordinates:

$$\left\langle e_1(t-\tau_1)e_2^*(t-\tau_2) \right\rangle = \left\langle P(t)P^*(t) \right\rangle \frac{e^{[j2\pi v_k((R_1-R_2)/c)]}}{R_1 R_2}$$

The quantity <P(t)P*(t)> is a measure of the time-averaged intensity (brightness) B(X,Y,Z) of the pixel ds at the surface Z(=0) within the volume W, referenced to the epoch of time when the plane wave from the transmitter hits the reference surface of the volume W. Integration over the surface of the volume W gives the mutual coherence function at frequency channel $v_k$ of the fields at points x1,y1 and x2,y2:

$$\Gamma_{12}(v_k,t) = \left\langle e_1(t-\tau_1)e_2^*(t-\tau_2) \right\rangle = \int_S \frac{B(X,Y,Z)e^{[j2\pi v_k(R_1-R_2)/c]}}{R_1 R_2} ds$$

Note that $(R_1- R_2)/c$ is the differential light travel time from the surface element ds to the interferometer elements at x1,y1 and x2,y2. Let R denote the distance between the interferometer plane and the reference position S of the volume at Z=0, then the distance $R_1$ and $R_2$ can be written as:

$$R_1^2 = (x1 - X)^2 + (y1 - Y)^2 + (R + Z)^2$$

$$R_2^2 = (x2 - X)^2 + (y2 - Y)^2 + (R + Z)^2$$

This can be expanded with binomial expansion where only the first two terms are kept:

$$R_1 \approx R + \frac{1}{2R}\left[(x1 - X)^2 + (y1 - Y)^2\right]$$

$$R_2 \approx R + \frac{1}{2R}\left[(x2 - X)^2 + (y2 - Y)^2\right]$$

This is valid assuming that the extension of the illuminated surface area is small compared to the distance R from the interferometer plane to the volume reference point. We can now write the difference in travel time as:

$$(R_1 - R_2)/c = \frac{(x_1^2 + y_1^2)^2 - (x_2^2 + y_2^2)^2}{2Rc} + \frac{(x_2 - x_1)X + (y_2 - y_1)Y}{Rc}$$

We will in the following approximate the product $R_1R_2$ in the denominator of the mutual spatial coherence function with $R^2$.
We now make the following substitutions:

$$u_k = (x1 - x2)\nu_k / c$$

$$v_k = (y1 - y2)\nu_k / c$$

$$w = \nu / c$$

$$n_{slagg} = c / V$$

$$\xi = X / R = \sin(\varphi)$$

$$\eta = Y / R = \sin(\theta)$$

$$d\xi d\eta = ds / R^2$$

$$\delta = \frac{x_1^2 + y_1^2 - (x_2^2 + y_2^2)}{2R}$$

The mutual spatial coherence function can now be written as:

$$\Gamma_{12}(u_k, v_k, t) = e^{j2\pi v_k \delta / c} \iint B(\xi, \eta, Z) e^{j2\pi (u_k \xi + v_k \eta)} d\xi d\eta$$

This is also the visibility function at position u,v,(w=0), and frequency channel k.:

$$V_{12}(u_k, v_k, t) = e^{j2\pi v_k \delta / c} \iint B(\xi, \eta, Z) e^{j2\pi (u_k \xi + v_k \eta)} d\xi d\eta$$

The item $2\pi v_k \delta / c$ is a phase shift caused by the path difference to the two interferometer elements which is due to that the wave front is not perfectly flat. This term can be disregarded as very small if the volume to be measured is in the far-field of the interferometer. If the volume is in the near-field of the interferometer, this term can be removed by using spherical instead of Cartesian coordinates.

Next we will consider the depth measurement. The reference time t is defined as the time when the wave front leaves the transmitter horn in the plane of the interferometer. The transmitted wave can be normalised and expressed as:

$$V_{tr}(t) = e^{-j2\pi v_k t}$$

We can now perform a fringe stop by cross-correlate the transmitted wave with the wave received by the interferometer 12 to get the time coherence function as:

$$V(u_k, v_k, v) = \left( V_{tr}(t) V_{12}^*(t + \tau) \right) = \iiint B(\xi, \eta, Z) e^{j2\pi (u_k \xi + v_k \eta - \tau v)} d\xi d\eta d\tau$$

Recognising that $\tau = -2Z/V$ since the additional delay is within the volume W, and $w_k = v_k$ we now can write the three dimensional visibility function as:

$$V(u_k, v_k, w) = \iiint B(\xi, \eta, Z) e^{j2\pi (u_k \xi + v_k \eta + 2Zw)} d\xi d\eta dZ$$

Apart from the small compensation term, the visibility and the brightness distributions are Fourier pairs, and the three dimensional reflection distribution of the volume W can be recovered from measurements in the u,v,w co-ordinate system:

$$B(\xi, \eta, Z) = \iiint V(u, v, w) e^{-j2\pi (u\xi + v\eta + 2Zw)} du dv dw$$

Data are received for each frequency for each receiver element. Each such element signal will then be phase compared at each frequency channel with the transmitted signal in the reference unit. The complex voltage for each unit and at each frequency channel will be stored in a computer, compared with each other unit as baseline pairs at each frequency channel separately. For N number of receiver elements there will be (N(N-1)/2 number of non-redundant baseline pairs per frequency channel. The new data volume is then transformed to X/R, Y/R, and Z co-ordinates to image the three dimensional reflection volume. If the content of the volume is known a priori, e.g. that the data is a solid surface, then a model of the volume can be assumed, the response of that model can be calculated for each baseline pair and frequency, the modelled data can be compared with the observed data and the model can then be adjusted statistically to minimize the difference between observed and modelled data. A number of well known error minimizing methods exist, maximum entropy methods and maximum likelihood methods.

In the one dimensional case the three dimensional visibility function above reduces to:

$$B(Z) = \int V(w)e^{-j2\pi\,2Zw}dw$$

This is the integral used for the usual depth measurements at a single point. In this case the transmitter and receiver are placed in the same unit and the transmitted signal is cross-correlated only with the received signal at each frequency channel.

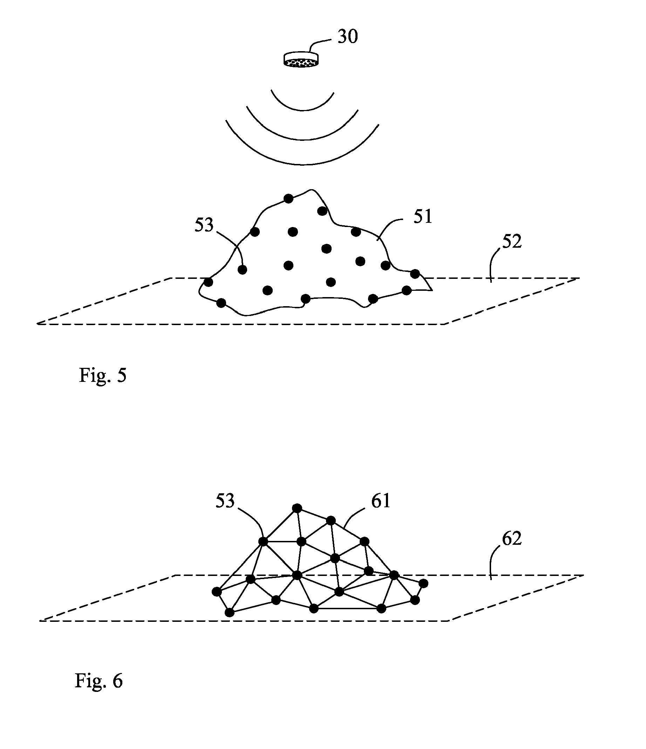

Figs 5 and 6 relate to a preferred embodiment of the invention, in which the positioning system and method as described is used for imaging of complete topological surfaces, using the method described with reference to Fig. 8. Fig. 5 illustrates schematically an object in the form of a pile 51, placed on a floor surface 52. The antenna unit 30 is placed over and aimed towards the object 51. In accordance with the procedure as described above, a coherent electromagnetic wave signal is transmitted towards the object, on which a number of reflection points 53 are detected and positioned through analysis of and calculation based on the reflected signals as detected in the receivers of the antenna unit 30. For each positioned point of reflection 53, its coordinates are stored in a memory connected to a computer system, e.g. computer 5. Fig. 6 illustrates schematically how image processing software has been executed on the position coordinates to establish a link between adjacent coordinates to create a surface 61, which is a three-dimensional representation of the positions of the detected reflection points 53. There are many well-known models for how to build up a surface from discrete points, and the model to use may be selected dependent on requirements on resolution, accuracy and processing power.

The positioning system and method may also be used for making further analysis of the field of view within which positioning has been made. For this purpose, a calculator unit of the computer system may be adapted to determine a volume as defined by the detected surface 61, preferably by integration. In one embodiment volume determination may be performed by integration towards an imaginary lower surface 62, i.e. a surface on the far side of the detected points of reflection, where the position of the lower surface may e.g. be represented by a flat surface running through the farthest detected position. Alternatively, the presence and position of a background reference surface 62 may be either known by being predefined, or it may be measured when the points of reflection are not present. Typically, the reference surface 62 may be ground or floor level, on which object 51 is placed. Once the volume has been measured, the weight may also be assessed for the object defined by the surface 61 determined from the detected points of reflection 53, and the reference surface 62. This is a simple calculation, provided the density of the object is known.

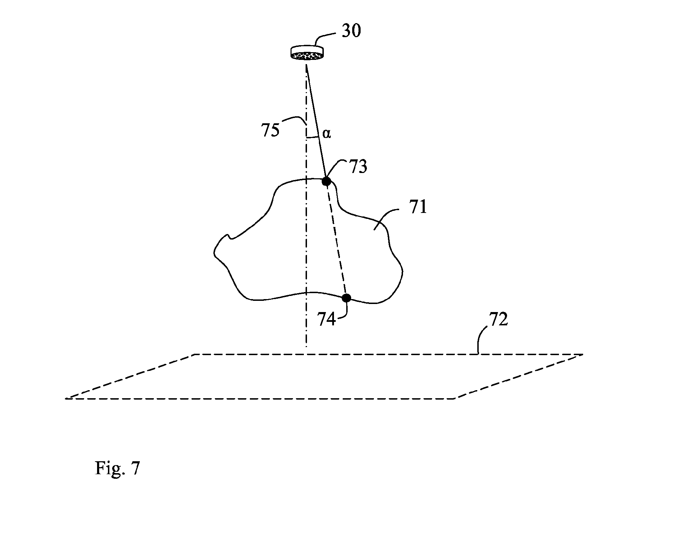

In accordance with an embodiment of the invention, the electromagnetic waves used in the transmitted signal are in the wavelength region of 1-100 GHz. In ranges within this region, many types of materials are transparent or semitransparent. Examples of such materials include liquids, such as oils, and granular material such as soil, grains and carbonized coal, so-called coke. For such materials, the transmission of a wave will yield one reflection at the first surface, and a second reflection at the second surface. An example of such a scenario is schematically illustrated in Fig. 7, in which an object 71 is to be analysed. Object 71 is semitransparent to radiation of the wavelength transmitted by antenna unit 30, which is aimed towards object 71. Object 71 may be placed on or at a distance from a background surface 72. In Fig. 7, only one direction of measurement is shown for the sake of simplicity, whereas is should be understood from the above that an isotropic antenna is preferably used to transmit the coherent wave simultaneously in the full beam angle of the antenna unit, which may be up to 120° about the main line of sight 75. In the positioning process of the invention, a first point of reflection 73 is detected and positioned, representing a position at which the transmitted wave first hits object 71 in a certain angle $\alpha$ from main line of sight 75. For the sake of simplicity again, the angle $\alpha$ is indicated in only one dimension transverse the main line of sight. The point of reflection 73 is positioned according to the method outlined above. However, since the surface of object 71 is also transparent to the radiation of the transmitted signal, a portion of the radiation hitting the object at 73 will continue through the object 71, as indicated by the dashed line. The reflectance in first surface portion is proportional to $(n_1-n_0)/(n_0+n_1)$ in intensity, where $n_0$ represents the refraction index in the medium prior to the object, typically air, and $n_1$ is the refraction index of the object 71, for the wave frequency in question. After propagating through object 71, a new point of reflection 74 will reflect parts of the radiation, again dependent on the shift in refraction index. A third reflection may also be obtained from the reference or background surface 72, though not indicated in the drawing.

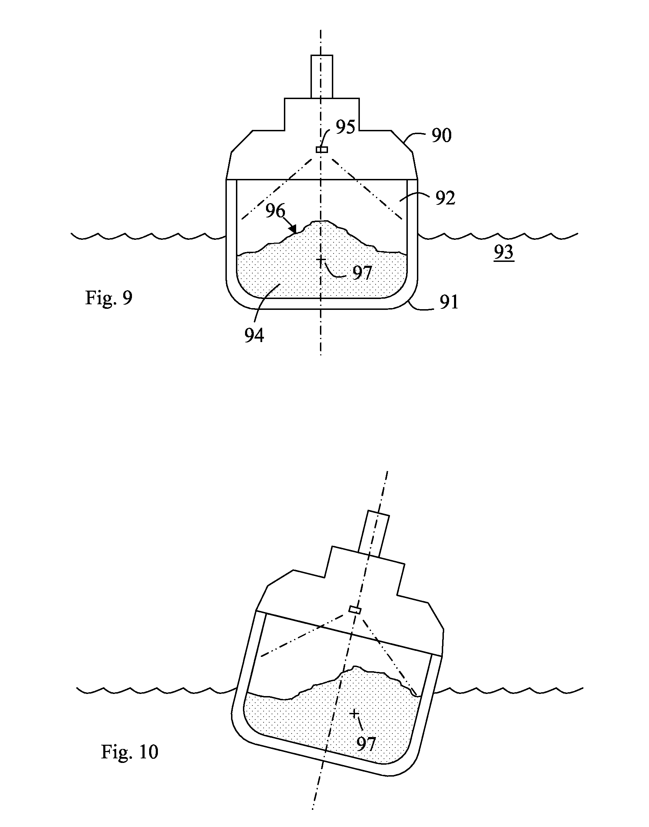

Different applications for the present invention are described below with reference to Figs 9-15. In these application embodiments, calculations for determination of positions, surfaces, volumes, mass, and so on, are preferably carried out by a control unit or computer 5 as shown in Fig. 1. The actual embodiment of such a control unit is not described in any more detail herein, but one embodiment of such a control unit is a computer with a microprocessor system and software with program code devised to perform calculations which may be more or less specific for each embodiment, but which is in each case based on the theories presented with reference to Fig. 8. It should also be noted that the actual calculations need not be performed in the computer 5 controlling the signal generator, but may take place in other control unit with which the computer 5 is communicatively connected.

Fig. 9 illustrates an embodiment of an application for the present invention in a fright vessel 90, such as a ship. Inside a hull 91, one or more cargo spaces 92 are defined. Fig. 9 illustrates a sea ship 90 carried on water 93, but the embodiment to be described is equally applicable to air vessels, such as airplanes or helicopters. Cargo spaces 92 may be used to ship different kinds of cargo 94, and particularly large volumes of liquid or particulate matter. Examples include oil and other liquid substances, coal, ore, coke, scrap metal and so on. A problem related to such loose cargo, is that it may float or drift inside the cargo space due to movements of the ship or poor loading of the cargo. At some point, a substantial off-centre displacement of the loose cargo may lead to heeling of the ship, as is illustrated in Fig. 10. Apart from a less than optimum position in the water 93, or air, with a resulting increase in fuel consumption, this may ultimately be dangerous.

According to an embodiment of the invention, this problem is overcome by providing an antenna 95 as presented above with reference to Figs 1-8, forming part of an apparatus for determining positions for a plurality of reflection points using a method as described with reference to Fig. 8, aimed at the cargo 94 in the cargo space 92. Antenna 95 is preferably placed in the vicinity of a ceiling of the cargo space 92, and is provided with antenna patches giving the antenna a field of view which covers the cargo space at least up to a predetermined height up its side walls. In the drawing, the field of view is indicated by the dash-dotted lines. Antenna 95 is preferably coupled to a supervision system, comprising a display or a data output to an operator, such that the present shape and position of an upper surface of the cargo can be assessed. Advantageously, the antenna is coupled to an apparatus for determining positions for a plurality of reflection points in an upper surface 96 of the cargo, which apparatus is further devised to produce a three-dimensional representation of a surface adapted to the determined positions of said plurality of reflection points, corresponding to the invention as described with reference to Figs 5 and 6. Since the antenna is fixed in relation to the cargo space, the position and shape of the background of the cargo, namely the cargo space walls, is well known. Furthermore, the composition of the cargo substance 94 is typically also at least roughly known. The information at about the known background, the determined position and shape of the surface, and the density of the substance 94, may be used in the supervision system. By integrating the determined surface against its background, the size and shape of the volume of the cargo 94 can be calculated, and thereby also the position of its mass centre 97 in the cargo space 92. Using information of the density the total mass for the cargo can also be calculated, a heeling parameter can be determined from the calculated total mass and the position of the mass centre 97. The heeling parameter may e.g. be provided as a measure of the tilting force provided by the mass of the cargo, including distance parameter to a mass centre for the ship and a magnitude parameter for the cargo mass. In an embodiment of the invention, the heeling parameter is calculated and the supervision system is arranged to trigger an alarm or information output when the heeling parameter exceeds a preset value. This may be used during loading of the cargo, or for alerting an operator of the supervision system during a voyage, and may be used as a decision basis for rearranging the cargo.

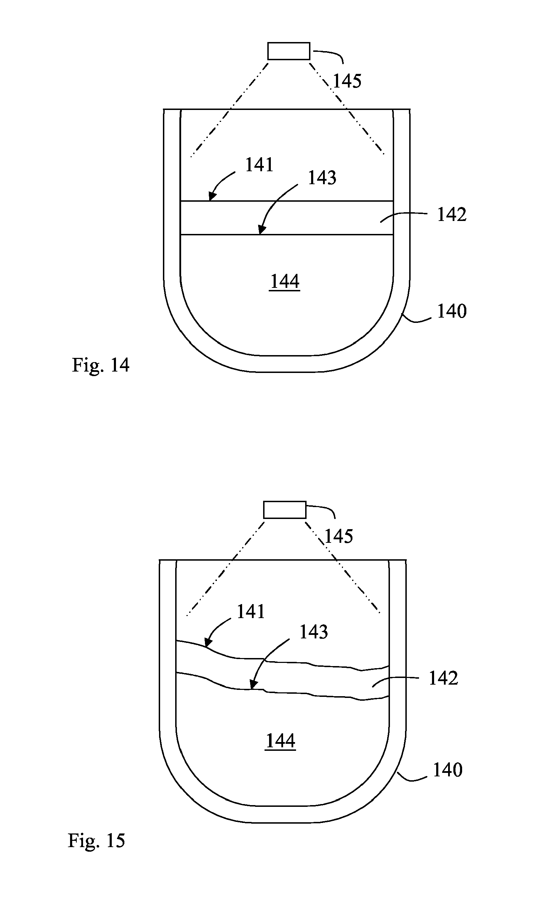

Fig. 11 illustrates an embodiment of an application for the present invention when used as a ground penetrating radar (GPR). GPR systems are used for a variety of purposes, for locating object under the ground surface. Different field of application include location of for pipes, tanks and drums, geological studies, grave searches and archaeological investigations. Typically, a lower radar frequency is usable to penetrate deeper into the ground than a higher frequency. A standard procedure for making a GPR investigation of a given area is to use a sleigh-carried radar which has a basically one-dimensional beam, and to drag the sleigh back and forth over the entire area. The radar response captured during the process is then combined with information of the path followed by the radar sleigh, for generating a subsurface image. This prior art process has some drawbacks, in that it is cumbersome, time-consuming, and less than well adapted to non flat surfaces. Furthermore, the path of the sleigh needs to be carefully controlled in order to obtain a correct image.

According to the embodiment of Fig. 11, a GPR system overcoming these drawbacks is provided, by using for an antenna 111 as presented above with reference to Figs 1-8, forming part of an apparatus for determining positions for a plurality of reflection points operating according to a method as described with reference to Fig. 8. The antenna is carried at an elevated position on a support structure 113 by a lifting device 112, e.g. by a crane or a caterpillar. The position of the antenna 111 is thus directly linked to the position of the support structure 113 by which the antenna is carried, which support structure 113 may be positioned by means of a traditional triangulation technique or by means of GPS data retrieved by a GPS receiver (not shown) in the caterpillar 112. The field of view (FOV) of antenna 111 is determined by the design of the antenna elements or patches of antenna 111. At present, antennas according to the invention have been manufactured with a FOV of up to 120°. Theoretically, if such an antenna 111 was used in a system according to Fig. 11, held by a caterpillar 112 about 5 meters over the ground surface 114, the antenna would cover a surface area of over 230 m$^2$. When placed 10 m up, the theoretical coverage is close to 1000 m$^2$. In practice, it may be advantageous to tilt the support structure 113 as illustrated to expose the ground in front of the carrier 112. Using the process disclosed above in general terms with reference to Fig. 7 and in more detail for the application of measurements in volume W with reference to Fig. 8, a ground penetrating radar system and method will be provided for detecting underground features 115. An advantage of such a solution is that an entire image of an area covered by the antenna will be imaged simultaneously, without having to move the antenna. This results in a simple procedure which is also less sensitive to measurement errors, since only one positioning step needs to be made for every area.

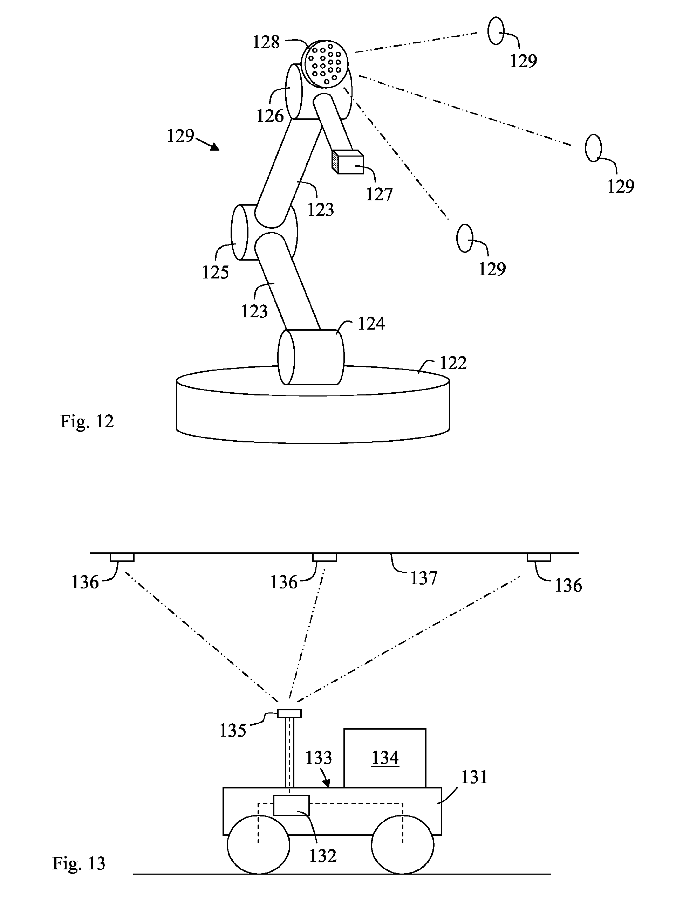

Fig. 12 illustrates an embodiment of an application for the present invention when used as positioning and guiding means for an industrial robot 121. Robot 121 has a stationary base 122, and a movable manoeuvre mechanism with one or more linkage arms 123 and pivot points 124, 125, 126. A robot head 127 is connected at a front end portion of the robot. The robot head 127 may e.g. carry a gripping tool, a welding tool, an assembly tool, just to mention a few well known options. The robot 121 is used for operation on some form of object (not shown), such as an apparatus on an assembly line, which may be stationary or moving with relation to the robot base 122. In order to work properly and perform its task the robot, particularly, the robot head 127, needs to be properly positioned.

According to the embodiment of Fig. 12, a positioning system for this purpose includes an antenna 128 as presented above with reference to Figs 1-8, forming part of an apparatus for determining positions for a plurality of reflection points operating according to a method as described with reference to Fig. 8. In one embodiment, as illustrated, the antenna 128 is carried by the robot and used for exposing and positioning a plurality of reflection points 129 in relation to the antenna itself. Since the position-determination method according to the invention is devised to calculate a three-dimensional position for a point of reflection, two points of reflection 129 fixed to the object are theoretically sufficient to securely position the object in space. The antenna 128 is fixed at a predetermined position with reference to robot head 127, whereby also the position for the latter is retrievable once the relative position between antenna 128 and reflection points 129 are determined. By defining reflection points 129 on the object to be operated on by robot 121, the position of the object may be determined using an antenna and an apparatus for determining positions for reflection points as described above. The robot head 127 may then be oriented to approach the object in a controlled manner.

The points of reflection have to be identified from a background noise level, and therefore need to be found in the overall picture captured within the field of view of the antenna 128. One way of doing this is to apply radar targets on well-defined places on the object, typically cube corner targets similar to radar targets used on boats.

In an alternative to the embodiment of Fig. 12, antenna 128 may be provided separate from the robot, or at a part of the robot 121 which is not fixed in position with reference to robot head 127 but to the stationary base 122. Antenna 128 is still used for exposing and positioning the object carrying the points of reflection 129. The position of the robot head 127, on the other hand, is known from the stationary position of robot base 122 and the relative setting of the robot manoeuvre mechanism. A control system for the robot may then make use of the position information for the object as determined by the antenna 128 for controlling the movement of robot head 127.

Fig. 13 illustrates an embodiment of an application for the present invention when used as positioning and guiding means for a vehicle. In many industrial applications automated trucks or other types of motorised carrier platforms are used for moving objects between different stations, such as assembly stations and storage rooms. Examples of such an industrial applications include the paper industry and printing offices, where large rolls of paper are transported on automated carrier vehicles. Fig. 13 illustrates such a vehicle 131 which has wheels controlled by driving and steering means 132 comprising an engine, typically an electric engine. A platform 133 is usable for loading an object 134 to be transported. Prior art solutions for guiding the vehicle include formation of signal lines, such as wires, incorporated underneath the floor, and sensor means in the vehicle for determining the position of the vehicle relative to the signal lines.

According to the embodiment of Fig. 13, an alternative positioning system for this purpose includes an antenna 135 as presented above with reference to Figs 1-8, forming part of an apparatus for determining positions for a plurality of reflection points 136 operating according to a method as described with reference to Fig. 8. The antenna 135 is carried by the vehicle 131 and used for exposing and positioning the plurality of reflection points 136 in relation to the antenna itself. Since the reflection points are fixed at predetermined positions, the positioning procedure acts to determine the position of vehicle 131 as such. The reflection points, which may be devised as described with reference to Fig. 12, are preferably positioned at or near a ceiling 137 and spaced apart from each other, The spacing between each two reflection points is selected such that the field of view for the antenna 135 will always cover at least two reflection points. In one embodiment, the reflection points are supported such that the same reflection points will always be covered by the antenna 135 during the full operational range of the vehicle 131. For a more vast operational range, it may be necessary to provide plural reflection points, such that the vehicle is devised to travel between covering different subsets of two or more reflection points. In such an embodiment, the system for driving and guiding the vehicle, including the apparatus for determining positions for a plurality of reflection points, has to be adapted for knowing which subset is currently illuminated by the radar antenna 135. One way of achieving this is to use a unique spacing between each two adjacent reflection points. Direction, distance and angle to the reflection points are determined using the method described above, and a measure of the distance between two exposed points of reflection may therefore also be calculated. Comparing the determined distance between two reflection points with predetermined spacing information will uniquely identify which two reflection points are exposed. For a simple case with only two exposed reflection points, there are in fact two different positions for the antenna 135, and thus the vehicle 131, which may give the same response. One way of overcoming this is to ensure, by careful selection of spacing, that at least three reflection points are always exposed. Another way of overcoming this is to simply rule out one of the two position options, in a logical filter of the system for driving and guiding the vehicle. This method may be used when the second possible position is irrelevant to the intended path of the vehicle 131, and there is no reason for the vehicle to be present at that second possible position.

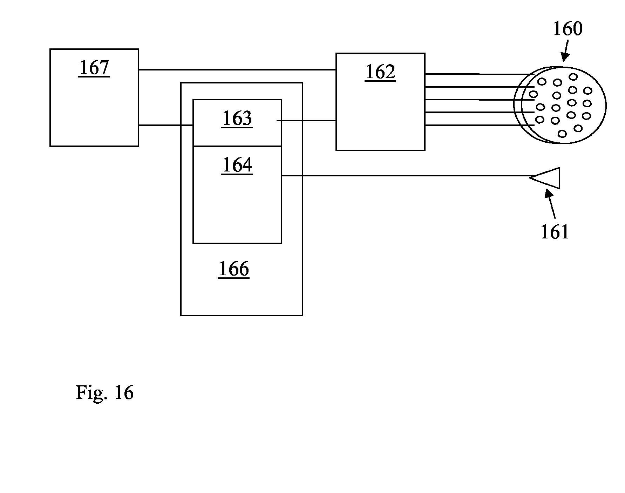

Fig. 14 illustrates an embodiment of an application for the present invention when used for monitoring a slag surface 141 in a furnace 140. In converters, ladles, electric arc furnaces and other metallurgical vessels, it is desirable to know the exact position of the slag surface 141, and optionally also the position of the interface 143 between the slag and the liquid metal 144 underneath. Methods for measuring the position of the slag surface using interferometry are known, e.g. from US 5,629,706 issued to the inventor of the present application. That and other solutions are basically one-dimensional, though, and are as such devised to measure the vertical position of slag surface 141 and metal surface 143 in one point of the slag surface 141. However, a problem related to the field of metal melts in furnaces is uneven, or asymmetric, melting. Such a scenario is schematically illustrated in Fig. 15, where the slag surface 141 and the metal surface 143 are substantially higher at the left side of the furnace 140 than on the right side. This will lead to a hotspot at the left side which may cause serious damage to the furnace wall, and ultimately bum through the wall.

According to the embodiment of Figs 14 and 15, the potential occurrence of such an asymmetric melt 144 is monitored using a positioning system including an antenna 145 as presented above with reference to Figs 1-8, forming part of an apparatus for determining positions for a plurality of reflection points operating according to a method as described with reference to Fig. 8. With reference to Fig. 8, volume W is in this embodiment the slag volume 142 defined between surfaces 141, 143 and the furnace walls. The positioning system will operate to provide a three-dimensional representation of the slag surface 141, similar to Fig. 6, which may be displayed on a screen to an operator of the furnace. Alternatively, a warning system for the furnace may be arranged to make a comparison between the position data of the three-dimensional representation and a preset level value, and be devised to trigger a warning signal if the result of the comparison is that the position data exceeds the level value. On way of doing this is to calculate within which end values the periphery of the slag surface 141 varies around the furnace wall, and to compare this with a predetermined deviation criterion, for instance a given number of centimetres. Using the present invention, position measurements of an overall slag surface may be accomplished by means of a single stationary antenna 145.

Experimental set-up

An experiment can be set-up to verify the method as specified in Figure 16. A number of antenna elements, made of patches on a substrate 160, are connected to a switch system 162 so that each antenna is connected to the input to a set of switches. This switching system is connected to a computer 166 so that any individual antenna can be chosen. The output of the switching system is connected to a receiver 163 so that any of the antennae can be connected to the receiver at any given time. One antenna 161, preferably also included as a patch on substrate 160 but illustrated as a separate element for the sake of simplicity, is connected to a transmitter 164. The transmitter and the receiver are a network analyzer instrument 165, e.g. a Wiltron 360B VNA. The network analyzer is stepped in frequency over a frequency band, e.g. 11 GHz to 12 GHz in 501 steps, preferably equal steps. For each frequency step, each receiving antenna is switched in and data are recorded in a computer as the transmitted signal divided by the received signal for each antenna element at each frequency separately.

Alternatively, each antenna element can be supplied with a receiver. All receivers must then be phase locked to a common frequency standard to form a coherent interferometer system. The data are then recorded simultaneously.

The data are then Fourier transformed from frequency to delay time for each receiving antenna. The data to each antenna is phase shifted to account for an offset from the interferometer optical centre. The baselines are then reconstructed by making complex conjugate multiplication for each antenna pair at each delay channel. Thereafter a two dimensional Fourier transform is made over all baseline pairs at each delay channel to transform from baseline coordinates to angular coordinates. The new data cube will then contain the three dimensional interferometer responses as two dimensional angles on concentric spheres. The coordinate system can then be transformed to Cartesian systems in order to better display the data cube.

**Claims**

1. Method for determining a position in space for a reflection point, using a transmitter antenna and a plurality of receiver antennas spaced apart perpendicular to a main line of sight, comprising the steps of:

- transmitting a coherent electromagnetic wave signal towards the reflection point;
- detecting a phase difference between the transmitted signal and a reflected signal from the reflection point received in a receiver antenna;
- repeating the steps of transmitting and receiving in a plurality of frequency steps over a frequency band;
- determining a distance (r) to the reflection point by measuring variation in phase difference dependent on signal frequency; and
- identifying an angle ($\varphi,\theta$) between a line of sight from the receivers to the reflection point, and the main line of sight, dependent on a delay between reception of reflected signals from the reflection point in at least two receiver antennas and a known spacing between said at least two receiver antennas.

2. The method of claim 1, comprising the steps of:

- combining the transmitted signal and received signals;
- performing a Fourier transformation of the combined signal; and
- performing the steps of detecting phase difference and determining delay in the frequency domain.

3. The method of claim 1, wherein the step of identifying an angle comprises the steps of:

- combining the signals received in the at least two receiver antennas to an aggregate receiver signal;
- determining the delay between reception of reflected signals from the reflection point in the at least two receiver antennas from the aggregate receiver signal; and
- calculating the angle based on the determined delay and the known spacing.

4. The method of claim 3, wherein the step of determining the delay between receptions of reflected signals comprises the step of:

- determining the phase difference between the received signals.

5. The method of claim 1, comprising the steps of:

- detecting amplitude variations in a signal received in at least one receiver antenna;
- comparing the amplitude variations with a threshold criterion; and
- identifying existence of a reflection point based on the comparison.

6. The method of claim 1, comprising the steps of:

- using an isotropic transmitter antenna to simultaneously expose a solid angle;
- determining the distance and angle to a plurality of reflection points within an overlap of said solid angle and a field of view of the receivers.

7. The method of claim 1, wherein the step of identifying an angle comprises the steps of:

- combining reflected signals received in the at least two receiver antennas to an aggregate receiver signal;
- selecting a delay between the at least two receiver antennas, representative of a certain angle of incidence of the reflected signals to the receivers dependent on the known spacing;
- detecting amplitude variations in the aggregate receiver signal as a function of the delay between the at least two receiver antennas;
- comparing the amplitude variations with a threshold criterion; and
- identifying existence of a reflection point based on the comparison.

8. The method of claim 7, comprising the step of:

- identifying the angle of incidence to the identified reflection point dependent on the delay of reception and the known spacing between the at least two receiver antennas.

9. The method of claim 6, comprising the step of:

- producing a three-dimensional representation of the positions of said plurality of reflection points.

**10.** The method of claim 6, comprising the step of:

- producing a three-dimensional representation of a surface adapted to the determined positions of said plurality of reflection points.

**11.** The method of claim 10, comprising the step of:

- integrating the three-dimensional representation of the surface to determine a volume defined by the surface.

**12.** The method of claim 6, comprising the steps of

- directing the transmitted signal towards an object;
- detecting received signals reflected in reflection points of an outer surface of the object;
- detecting received signals, which have penetrated the outer surface and reflected in a lower reflection point beneath the outer surface of the object;
- determining the position of the lower reflection point.

**13.** The method of claim 12, comprising the steps of

- detecting received signals, which have penetrated the outer surface and reflected in a plurality of lower reflection points beneath the outer surface of the object;
- determining the positions of the plurality lower reflection points;
- producing a three-dimensional representation of a lower surface adapted to the positions of the plurality of lower reflection points.

**14.** The method of claim 13, comprising the steps of

- integrating the three-dimensional representation of the lower surface to determine a volume defined by the lower surface.

**15.** The method of claim 1, comprising the step of:

- using the transmitter antenna also as one of said receiver antennas.

**16.** The method of any of the preceding claims 1-15, used in a cargo supervision application, comprising the steps of:

- arranging the transmitter antenna and receiver antennas in a cargo space of a freight vessel;
- determining positions for a plurality of reflection points in a surface of a cargo present in the cargo space;
- producing a three-dimensional representation of a surface adapted to the determined positions of said plurality of reflection points;
- providing the three-dimensional representation to a cargo supervision system.

**17.** The method of claim 16, comprising the step of:

- integrating the three-dimensional representation of a surface against walls of the cargo space to provide a volume representation of the cargo.

**18.** The method of claim 17, comprising the step of:

- determining the mass of the cargo using the volume representation and a density value for the cargo.

**19.** The method of claim 18, comprising the steps of:

- calculating a position of the centre of gravity for the volume representation; and
- calculating a heeling parameter representing a tilting force provided by the mass of the cargo.

**20.** The method of claim 19, comprising the steps of:

- comparing the heeling parameter with a preset value; and
- triggering an alarm or information output when the heeling parameter exceeds the preset value.

21. The method of any of the preceding claims 1-15, used in a ground penetrating application, comprising the steps of:

- arranging the transmitter antenna and receiver antennas on a support structure;
- elevating the support structure over, and aiming the transmitter antenna towards, a ground surface area;
- determining positions for a plurality of reflection points present underneath said ground surface;
- producing a three-dimensional representation of the points of reflection.

22. The method of any of the preceding claims 1-15, used in a robot guiding application, comprising the steps of:

- providing an industrial robot having a stationary base connected to a movable manoeuvre mechanism;
- arranging the transmitter antenna and receiver antennas connected to the robot;
- determining positions for a plurality of reflection points on an object to be operated by the robot;
- controlling the movement of a robot head of the manoeuvre mechanism dependent on the determined positions.

23. The method of claim 22, comprising the step of:

- arranging the transmitter antenna and receiver antennas in a fixed relation to the robot head.

24. The method of claim 22, comprising the step of:

- arranging the transmitter antenna and receiver antennas in a fixed relation to the stationary base;
- monitoring the movement of the manoeuvre mechanism to determine the relative position of the robot head in relation to the stationary base; and
- controlling the movement of a robot head dependent on the determined positions and the movement of the manoeuvre mechanism.

25. The method of any of the preceding claims 1-15, used in a vehicle positioning application, comprising the steps of:

- providing a vehicle comprising driving and steering means;
- arranging the transmitter antenna and receiver antennas connected to the vehicle;
- determining positions for a plurality of reflection points in an environment of the vehicle;
- controlling the driving and steering means of the vehicle dependent on the determined positions.

26. The method of claim 25, comprising the steps of:

- determining a distance between the positions of the points of reflection;
- identifying a point of reflection based on the distance to an adjacent point of reflection;
- retrieving true position data for the identified point of reflection; and
- determining the position for the vehicle dependent on the true position of the point of reflection and the determined position of the point of reflection relative to the antenna transmitter.

27. The method of any of the preceding claims 1-15, used in an application for monitoring a slag surface in a furnace, comprising the steps of:

- providing a furnace, containing a melt covered by a slag layer having a slag surface;
- arranging the transmitter antenna and receiver antennas at a known position relative the furnace;
- determining positions for a plurality of reflection points in the slag surface;
- providing a three-dimensional representation of the slag surface;
- monitoring the shape or position of the slag surface based on the three-dimensional representation.

28. The method of claim 27, comprising the step of:

- presenting an image of the three-dimensional representation on a display.

29. The method of claim 27, comprising the steps of:

- comparing position data of the three-dimensional representation with a preset level value;
- triggering a warning signal if the position data exceeds the level value.

30. Apparatus for determining a position in space for a reflection point, comprising:

- a signal generator, devised to generate a electromagnetic wave signal at a defined frequency,
- an antenna unit, including a transmitter antenna devised to transmit a generated coherent electromagnetic wave, and a plurality of receiver antennas separated by a known spacing perpendicular to a main line of sight and devised to receive reflected portions of the transmitted wave,
- phase comparator means connected to the transmitter antenna and the receiver antennas,
- a control unit connected to the phase comparator means, operable to calculate an angle to a reflection point from detected phase difference between at least two receiver antennas and the spacing between said at least two receiver antennas, and to calculate a distance to the reflection point from detected phase difference between the transmitter antenna and a receiver antenna dependent on the frequency.

31. The apparatus as recited in claim 30, further comprising a frequency stepping function connected to the signal generator, devised to generate the wave signal at a plurality of frequency steps over a frequency band, wherein the control unit is devised to calculate a distance to the reflection point from a detected variation in the phase difference between the transmitter antenna and a receiver antenna over said frequency steps.

32. The apparatus as recited in claim 30, wherein the transmitter antenna and receiver antennas have a large beam width pattern such that the generated coherent electromagnetic wave is transmitted to cover an entire field or object.

33. The apparatus as recited in claim 32, wherein the beam width pattern represents a full angle field of view of 0-120°.

34. The apparatus as recited in claim 30, further comprising a computer system and computer program code means, which when executed causes the computer system to carry out the steps of any of claims 1-29.

35. System for determining the volume of a body, comprising an apparatus as recited in claim 32, wherein the antenna unit is arranged at a distance from the body so as to simultaneously illuminate the whole body from the position of the antenna, wherein the control unit is devised to determine the positions for a plurality of reflection points in a surface of the object, and further comprises means for producing a three-dimensional representation of a surface adapted to the determined positions of said plurality of reflection points, and means for integrating the three-dimensional representation of the surface to determine a volume defined by the surface.

36. System for producing an image of underground features, comprising an apparatus as recited in claim 32, wherein the antenna unit is arranged is held at an elevated position by means of a lifting device so as to simultaneously illuminate an area of a ground surface, wherein the control unit is devised to determine the position for a reflection point located under the ground surface.

37. The system producing an image of underground features as recited in claim 36, wherein the control unit is devised to determine the positions for a plurality of reflection points under the ground surface, and further comprises means for producing a three-dimensional representation of the positions of said plurality of reflection points.

38. System for monitoring a cargo space of a freight vessel, comprising an apparatus as recited in claim 32, wherein the antenna unit is aimed at the cargo space devised for holding a cargo, and wherein the control unit is devised to determine the positions for a plurality of reflection points in a surface of a cargo placed in the cargo space and further comprises means for producing a three-dimensional representation of a surface adapted to the determined positions of said plurality of reflection points. arranged, the control unit being communicatively connected to provide the three-dimensional representation to a cargo supervision system.

39. The system for monitoring a cargo space of a freight vessel as recited in claim 38, comprising means for integrating the three-dimensional representation of the surface against walls of the cargo space to provide a volume representation of the cargo.

40. The system for monitoring a cargo space of a freight vessel as recited in claim 39, comprising means for determining the mass of the cargo using the volume representation and a density value for the cargo.

**41.** The system for monitoring a cargo space of a freight vessel as recited in claim 40, comprising means for calculating a position of the centre of gravity for the volume representation, and means for calculating a heeling parameter representing a tilting force provided by the mass of the cargo on the freight vessel.

**42.** The system for monitoring a cargo space of a freight vessel as recited in claim 41, comprising means for comparing the heeling parameter with a preset value, and means for triggering an alarm or information output when the heeling parameter exceeds the preset value.

**43.** System for monitoring a slag surface in a furnace, comprising an apparatus as recited in claim 32, wherein the antenna unit is arranged at a known position relative the furnace and aimed at an interior portion of the furnace, devised to contain a melt covered by a slag layer having a slag surface, wherein the control unit is devised to determine the positions for a plurality of reflection points in the slag surface and further comprises means for providing a three-dimensional representation of the slag surface.

**44.** The system for monitoring a slag surface in a furnace as recited in claim 43, comprising a display for presenting an image of the three-dimensional representation.

**45.** The system for monitoring a slag surface in a furnace as recited in claim 43, comprising means for comparing position data of the three-dimensional representation with a preset level value, and means for triggering a warning signal if the position data exceeds the level value.

**46.** System for guiding a robot having a stationary base connected to a movable manoeuvre mechanism with a robot head, comprising an apparatus as recited in claim 32 with the antenna unit connected to the robot, wherein the control unit is devised to determine the positions for a plurality of reflection points on an object to be operated by the robot, and devised to control the movement of the manoeuvre mechanism dependent on the determined positions.

**47.** The system for guiding a robot as recited in claim 46, wherein the antenna unit is arranged in a fixed relation to the robot head.

**48.** The system for guiding a robot as recited in claim 46, wherein the antenna unit is arranged in a fixed relation to the stationary base, and the control unit is devised to monitoring the movement of the manoeuvre mechanism to determine the relative position of the robot head in relation to the stationary base, and to control the movement of the robot head dependent on the determined positions and the movement of the manoeuvre mechanism.

**49.** System for positioning a vehicle, comprising an apparatus as recited in claim 32, wherein the antenna unit is carried on the vehicle and a number of reflection points are fixed at predetermined positions in an environment of the vehicle, said control unit being devised to determine the relative position of at least two of said number of reflection points with regard to the antenna unit, and to calculate a position for the vehicle dependent on the predetermined position and the relative position for the at least two points of reflection.

**50.** The system for positioning a vehicle as recited in claim 49, said vehicle comprising driving and steering means, wherein the control unit is further devised to control the driving and steering means of the vehicle dependent on the determined position of the vehicle.

**51.** The system for positioning a vehicle as recited in claim 49, wherein the control unit is devised to determine a distance between the positions of the at least two points of reflection, and to identify a point of reflection based on the distance to an adjacent point of reflection, the control unit further being devised to retrieve predetermined position data for the identified point of reflection from a memory.

**52.** Antenna unit, devised for transmission of a coherent electromagnetic wave signal at a defined frequency and reception of a reflected signal from a point of reflection at a position in space, comprising a support structure carrying a transmitter antenna and a plurality of receiver antennas spaced apart perpendicular to a main line of sight of the antenna unit.

**53.** The antenna unit as recited in claim 52, wherein the receiver antennas are distributed in a plane on said support structure, the normal direction of that plane defining the main line of sight.

**54.** The antenna unit as recited in claim 52, wherein one of the receiver antennas is also the transmitter antenna.

**55.** The antenna unit as recited in claim 52, wherein the transmitter antenna and receiver antennas have a large beam width pattern such that the generated coherent electromagnetic wave is transmitted to cover an entire field or object.

**56.** The antenna unit as recited in claim 55, wherein the beam width pattern represents a full angle field of view of 0-120°.

Fig. 1

Fig. 2

Fig. 3

Fig. 4

30

53 51 52

Fig. 5

53 61 62

Fig. 6

Fig. 7

Fig. 8

Fig. 11

Fig. 9

Fig. 10

Fig. 14

Fig. 15

Fig. 12

Fig. 13

Fig. 16

**European Patent Office**

## EUROPEAN SEARCH REPORT

Application Number

EP 05 11 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/020648 A1 (FIENUP JAMES R) 30 January 2003 (2003-01-30) | 52-56 | INV. G01V3/12 G01S13/89 |
| A | * paragraphs [0005], [0015], [0021], [0022], [0047]; claims 1-5 * ----- | 1-51 | |
| X | US 4 359 732 A (MARTIN ET AL) 16 November 1982 (1982-11-16) * column 3, line 52 - column 4, line 48; claims 1,2; figures 2,6 * ----- | 1-56 | |
| X | US 4 728 897 A (GUNTON ET AL) 1 March 1988 (1988-03-01) | 52-56 | |
| A | * column 4, line 40 - column 5, line 45 * * column 6, line 10 - line 16 * ----- | 1-51 | |
| X | US 2002/030492 A1 (GUO YANPING ET AL) 14 March 2002 (2002-03-14) | 52-56 | |
| A | * paragraphs [0006], [0010], [1335], [0075] - [0079]; figures 7,8,12 * ----- | 1-51 | |
| A | US 5 629 706 A (BAAAATH ET AL) 13 May 1997 (1997-05-13) * abstract; figure 2 * ----- | 1-56 | **TECHNICAL FIELDS SEARCHED (IPC)** G01V G01S |

The present search report has been drawn up for all claims

| Place of search | Date of completion of the search | Examiner |
|---|---|---|
| Munich | 7 March 2006 | Thomas, J |

EPO FORM 1503 03.82 (P04C01)

**ANNEX TO THE EUROPEAN SEARCH REPORT
ON EUROPEAN PATENT APPLICATION NO.**

EP 05 11 0329

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2006

| Patent document cited in search report | | Publication date | Patent family member(s) | | Publication date |
|---|---|---|---|---|---|
| US 2003020648 | A1 | 30-01-2003 | NONE | | |
| US 4359732 | A | 16-11-1982 | NONE | | |
| US 4728897 | A | 01-03-1988 | CA | 1244919 A1 | 15-11-1988 |
| | | | DE | 3578730 D1 | 23-08-1990 |
| | | | EP | 0179601 A2 | 30-04-1986 |
| | | | GB | 2165701 A | 16-04-1986 |
| | | | JP | 61180170 A | 12-08-1986 |
| US 2002030492 | A1 | 14-03-2002 | NONE | | |
| US 5629706 | A | 13-05-1997 | AT | 250760 T | 15-10-2003 |
| | | | AU | 703330 B2 | 25-03-1999 |
| | | | AU | 6012994 A | 29-08-1994 |
| | | | CA | 2155682 A1 | 18-08-1994 |
| | | | DE | 69433175 D1 | 30-10-2003 |
| | | | DE | 69433175 T2 | 17-06-2004 |
| | | | EP | 0697108 A1 | 21-02-1996 |
| | | | ES | 2208654 T3 | 16-06-2004 |
| | | | JP | 8506894 T | 23-07-1996 |
| | | | SE | 501472 C2 | 27-02-1995 |
| | | | SE | 9300348 A | 04-08-1994 |
| | | | WO | 9418549 A1 | 18-08-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5629706 A

### Non-patent literature cited in the description

- **XIAOJIAN XU.** Three-Dimensional Interferometric ISAR Imaging for Scattering Diagnosis and Modelling. *IEEE Transactions on Image Processing,* 07 July 2001, vol. 10

- **JOHN F. FEDERICI.** Terahertz Imaging Using an Interferometric Array. *Applied Physics Letters,* 22 September 2003, vol. 83 (12